# FASCICULE DE BREVET EUROPEEN

(11) **EP 3 880 542 B1**
(45) Date de publication et mention de la délivrance du brevet: **08.03.2023**
(21) Numéro de dépôt: 19798651.6
(22) Date de dépôt: 08.11.2019
(51) Int. Cl.: B62D 25/14, B62D 29/04

(54) **ÉLÉMENT STRUCTUREL LACUNAIRE POUR PLANCHE DE BORD, TRAVERSE ASSOCIÉE ET PLANCHE DE BORD CORRESPONDANTE**
STRUKTURELLES ZELLENGEWEBEELEMENT FÜR ARMATURENBRETT, ZUGEHÖRIGER QUERTRÄGER UND ENTSPRECHENDES ARMATURENBRETT
OPENWORK STRUCTURAL ELEMENT FOR DASHBOARD, ASSOCIATED CROSSMEMBER AND CORRESPONDING DASHBOARD

(30) Priorité: 15.11.2018 FR 1860516
(43) Date de publication de la demande: 22.09.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: BEZEAULT, Loic, 78150 LE CHESNAY (FR); LAW, Robin, 92380 GARCHES (FR)
(74) Mandataire: Renault Group
(86) Numéro de dépôt international: PCT/EP2019/080729
(87) Numéro de publication internationale: WO 2020/099273

(56) Documents cités:
- WO-A1-2019/022973
- CN-A- 108 639 160
- DE-A1-102006 040 624
- US-A1- 2004 108 744
- US-A1- 2019 210 464

## Description

L'invention concerne un élément structurel à structure lacunaire formant un corps de planche de bord. Elle concerne également une traverse conformée pour être introduite dans l'élément structurel et fixée à celui-ci, et une planche de bord comprenant l'élément structurel et la traverse.

Dans le domaine des véhicules automobiles, les planches de bord sont installées transversalement dans l'habitacle, à l'avant des places du conducteur et du passager avant. Le corps de planche de bord constitue l'ossature de la planche de bord. Il est recouvert d'une garniture ou peau formant la paroi externe de la planche de bord. Ce corps de planche de bord assure notamment le support de divers équipements tels que le tableau de bord, les indicateurs de conduite, divers moyens de contrôle, par exemple des équipements de climatisation, d'autoradio et de navigation.

De manière usuelle, un corps de planche de bord est composé de nombreux éléments assemblés. Il s'agit en général de pièces en matériau polymère ou composite obtenues par moulage et assemblées ensuite par bouterollage, vissage, etc. Les documents DE 10 2006 040624 A1, US 2004/108744 A1, US 2019/210464 A1 et WO 2019/022973 A1 décrivent de tels dispositifs de planche de bord connus. Le document CN 108 639 160 A décrit également un élément structurel formant un corps de planche de bord de véhicule automobile conforme au préambule de la revendication 1. L'assemblage d'un corps de planche de bord est donc relativement complexe et l'ensemble relativement lourd.

L'invention vise à pallier ces inconvénients en proposant un corps de planche de bord réalisé d'une seule pièce, notamment par un procédé de fabrication additive dite « impression en trois dimensions », également appelée « impression 3D ».

A cet effet, l'objet de l'invention concerne un élément structurel formant un corps de planche de bord de véhicule automobile avec les caractéristiques de la revendication 1.

Par « structure lacunaire », on entend une structure comportant des alvéoles, ajourages, et/ou cavités destinés à limiter la quantité de matière. La quantité de matière utilisée peut correspondre à une quantité de matière minimale nécessaire à la tenue mécanique de la structure pour l'utilisation envisagée. Cette quantité de matière peut être déterminée par calcul des efforts que doit supporter la structure, par exemple pour sa tenue propre sous son poids, pour tenir sous un effort réparti en surface, pour ses fixations à la caisse du véhicule, pour l'intégration d'éléments connexes (interfaces de fixations, intégration du bloc HVAC- «heating, ventilation and air-conditioning» (chauffage, ventilation et air conditionné), intégration des éléments des volumes de rangement, etc.).

La structure lacunaire de l'élément structurel selon l'invention se présente ainsi sous la forme d'un réseau de matière formant des mailles et des noeuds. Un tel réseau peut être formé de parties semblables à des vaisseaux creux, semi pleins (structure intérieure appelée aussi latice) ou pleins interconnectés.

Les éléments de fixation de l'élément structurel pour la fixation de la traverse peuvent être positionnés de manière à être fixés à une zone supérieure ou inférieure de la traverse, dans la position d'installation de l'élément structurel. Une fixation à une zone inférieure de la traverse peut toutefois améliorer le maintien de la traverse.

Le deuxième passage reçoit le support de fixation de colonne de direction, sur lequel sera monté le volant du véhicule. Il est par conséquent situé en regard du conducteur, dans la position d'installation de l'élément structurel.

Ainsi, le deuxième passage peut être relié au premier passage à proximité d'une extrémité du premier passage et les éléments de fixation du premier passage sont alors situés entre le deuxième passage et l'autre extrémité du premier passage. Ceci peut permettre de faciliter l'introduction de la traverse à l'intérieur du premier passage.

L'élément structurel peut comporter une ossature interne de structure lacunaire d'un seul tenant avec une peau externe délimitant au moins en partie un volume de l'élément structurel, ladite peau externe présentant une surface externe choisie parmi une surface lacunaire, une surface pleine, une surface présentant une ou plusieurs zones lacunaires et pleines. Notamment, cette peau externe peut correspondre à une partie visible de l'intérieur de l'habitacle lorsque l'élément structurel est dans la position d'installation. Le deuxième passage débouche alors sur une face de l'élément structurel pourvue de cette peau externe.

L'élément structurel selon l'invention est de préférence obtenu par impression en trois dimensions, par exemple par dépôt de filament en fusion (« Fused Déposition Modeling »- Réalisation d'un modèle par dépôt en fusion ou « Fused Filament Fabrication » - fabrication par filament en fusion) ou par frittage sélectif par laser (« sélective laser sintering »). A cet effet, tout matériau susceptible d'être imprimé par cette technique est utilisable.

Avantageusement, le matériau peut être un matériau polymère choisi parmi l'acrylonitrile-butadiène-styrène (ABS), le polypropylène (PP), l'acide polylactique (PLA). Le matériau polymère peut en outre être chargé en particules de verre ou de carbone.

L'invention concerne également une planche de bord destinée à être montée à l'intérieur d'un véhicule suivant une direction transversale de celui-ci, avec une traverse de planche de bord insérée à l'intérieur d'un élément structurel selon l'invention. La traverse comprend un tube cintré, de préférence creux, présentant un rayon de courbure constant. La traverse peut ainsi être réalisée de manière très simple, notamment, le tube peut être d'une seule pièce et/ou peut présenter une section constante sur sensiblement toute sa longueur. En outre, la section du tube peut être de forme géométrique simple, par exemple circulaire, bien que d'autres formes soient envisageables (section ovale, oblongue, carrée, rectangulaire, ...).

Le tube peut être en métal, par exemple en acier.

Dans un mode de réalisation, la traverse peut comprendre au moins deux éléments de fixation solidaires du tube destinés à sa fixation à l'élément structurel.

Les éléments de fixation peuvent alors s'étendre le long d'une même ligne longitudinale de surface du tube, parallèlement à un axe central du tube. Ceci peut permettre de faciliter l'introduction de la traverse à l'intérieur du premier passage de l'élément structurel.

Ces éléments de fixation peuvent être des pattes en forme de U et solidarisées à la traverse, par exemple par soudage, de sorte que la traverse ferme leur concavité. Elles peuvent ainsi être réalisées de manière simple et leur fixation est robuste. En outre, cette configuration permet de fixer (notamment par soudage) un écrou sur le fond de la partie en U, à l'intérieur de la concavité de la patte, permettant la fixation d'une vis traversant un orifice situé au centre de l'écrou.

Dans un mode de réalisation, le tube de la traverse est équipé d'un flasque à chacune de ses extrémités, au moins l'un des flasques étant assemblé au tube de manière amovible. La traverse peut ainsi être introduite à l'intérieur de l'élément structurel via une extrémité dépourvue de flasque, ce qui permet de faciliter son introduction à l'intérieur du premier passage de l'élément structurel mais aussi de réduire les dimensions internes du premier passage.

Cette fixation amovible peut être réalisée par un manchon solidaire du flasque s'emboitant sur une extrémité du tube. Avantageusement, le manchon peut présenter au moins un méplat coopérant avec un méplat de l'extrémité du tube. Ceci permet de positionner précisément le manchon, et donc le flasque par rapport au tube, ce qui peut faciliter le montage du flasque sur la caisse du véhicule. La présence d'un méplat permet également de bloquer toute rotation du manchon par rapport au tube lorsque celui-ci est de section circulaire.

Selon l'invention, la planche de bord comprend les caractéristiques de la revendication 5.

L'ensemble ainsi obtenu présente un nombre limité de pièces et de fixations, ce qui permet d'alléger sa masse et de simplifier son montage.

En particulier, l'élément structurel et/ou la traverse peuvent être tel que précédemment décrit.

Notamment, le tube de la traverse peut être équipé d'un flasque à chacune de ses extrémités, au moins l'un des flasques étant assemblé au tube de manière amovible. Cet assemblage peut être réalisé par un manchon s'emboitant sur une extrémité du tube tel que précédemment décrit.

L'élément structurel peut être conformé pour recevoir le support de fixation de colonne de direction sous la traverse lorsque la planche de bord est montée à l'intérieur du véhicule. Notamment, le support de fixation de colonne de direction peut être situé en partie en avant de la traverse dans la position d'installation de l'élément structurel.

Le support de fixation de colonne de direction peut en outre comprendre une partie de réception de la traverse, par exemple de forme complémentaire à la traverse. Ceci peut faciliter l'introduction de la traverse, la partie de réception pouvant guider le coulissement de la traverse, et aussi améliorer le maintien de la traverse, notamment lorsque le support de fixation de la colonne de direction est sous la traverse.

L'invention a également pour objet un véhicule automobile comprenant les caractéristiques de la revendication 7.

L'ensemble peut ainsi être monté de manière simple et rapide.

Le support de fixation de colonne de direction peut être fixé sous la traverse, ce qui peut favoriser le maintien de celle-ci. Il peut être en partie en avant de la traverse par rapport à la direction longitudinale du véhicule.

En variante ou en combinaison, la concavité de la traverse peut être dirigée vers l'avant du véhicule lorsque la planche de bord est montée à l'intérieur de celui-ci. Ceci permet d'avancer au maximum la traverse vers l'arrière du véhicule, en particulier au niveau de sa fixation au support de colonne de direction. Une telle position rapprochée de la traverse et du support de colonne de direction peut permettre de limiter les vibrations qui seront transmises au volant.

Dans tous les cas, la traverse peut en outre s'étendre dans un plan sensiblement horizontal, ou horizontal. Une telle position proche de l'horizontale permet également de réduire la distance séparant le support de colonne de direction et la traverse.

L'invention est maintenant décrite en référence aux dessins annexés, non limitatifs, dans lesquels :
- la figure 1 est une vue en perspective d'un élément structurel lacunaire selon un mode de réalisation de l'invention ;
- la figure 2 est une vue en perspective de l'élément structurel de la figure 1 sur lequel est fixé un support de fixation de colonne de direction ;
- la figure 3 est une vue similaire à la figure 2 sur laquelle une traverse selon un mode de réalisation de l'invention a été mise en place à l'intérieur de l'élément structurel ;
- la figure 4 est une vue similaire à la figure 3, sur laquelle la traverse est pourvue de ses 2 flasques ;
- la figure 5 est une vue de côté de l'élément structurel représenté figure 1 ;
- la figure 6 est une vue en perspective d'une traverse selon un mode de réalisation de l'invention, fixée à un support de fixation de colonne de direction ;
- la figure 7 représente l'un des flasques de la traverse représentée figure 6 ;
- la figure 8 représente l'extrémité de la traverse coopérant avec le flasque de la figure 7 ;
- la figure 9 représente une vue en coupe de la traverse en un point de fixation à l'élément structurel.

Dans la présente description, les termes avant, arrière, supérieur, inférieur, font référence aux directions avant et arrière du véhicule, haut, bas, lorsque la planche de bord, comprenant l'élément structurel et la traverse, est montée sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5°, avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

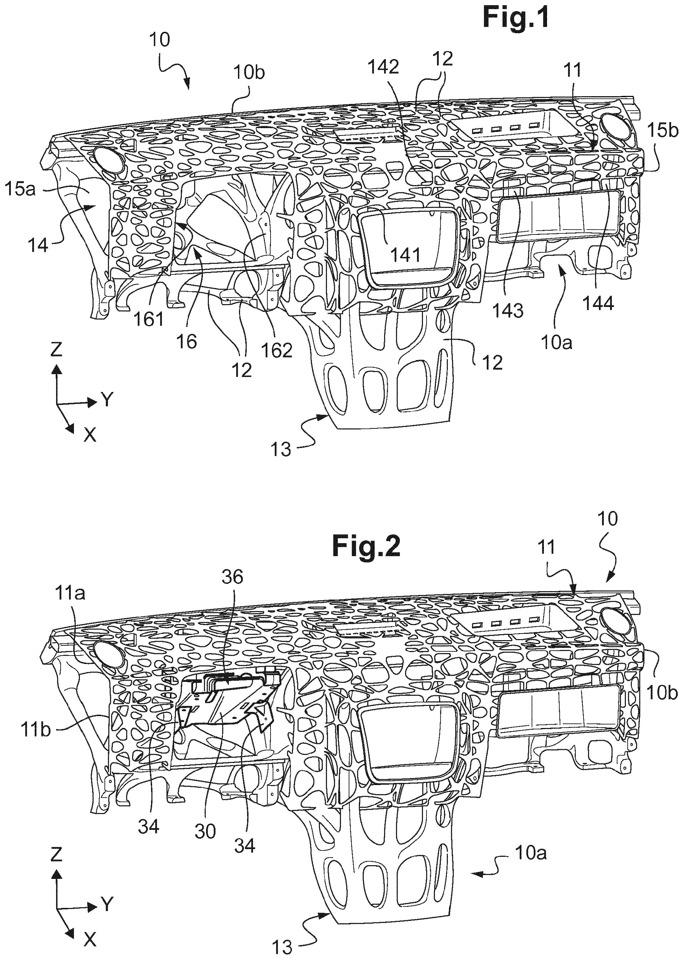

La figure 1 représente un élément structurel 10 formant un corps de planche de bord de véhicule automobile. Cet élément structurel 10 est destiné à être installé dans une position d'installation transversale (suivant l'axe Y) à l'intérieur d'un habitacle de véhicule.

Selon l'invention, cet élément structurel 10 présente une structure lacunaire d'un seul tenant, ici réalisée par impression en trois dimensions (autrement appelée « impression 3D »).

Tel que visible sur la figure 1 (et sur les figures 2 à 5), on distingue ainsi un réseau de parties interconnectées semblables à des vaisseaux 12. L'épaisseur et la forme de chacun de ces vaisseaux 12 peuvent être choisies de manière à obtenir une structure utilisable pour l'utilisation souhaitée, par exemple remplissant des conditions de tenue mécanique, raideur, ou autre. De manière similaire, les zones d'interconnexion de ces vaisseaux 12 peuvent être de formes diverses et de dimensions diverses. Enfin, ces vaisseaux peuvent être creux ou pleins. On notera en outre que des vaisseaux creux peuvent comprendre une structure interne formant un réseau (structure en forme de treillis ou en forme alvéolaire) permettant de renforcer la structure du vaisseau tout en limitant la quantité de matière utilisée.

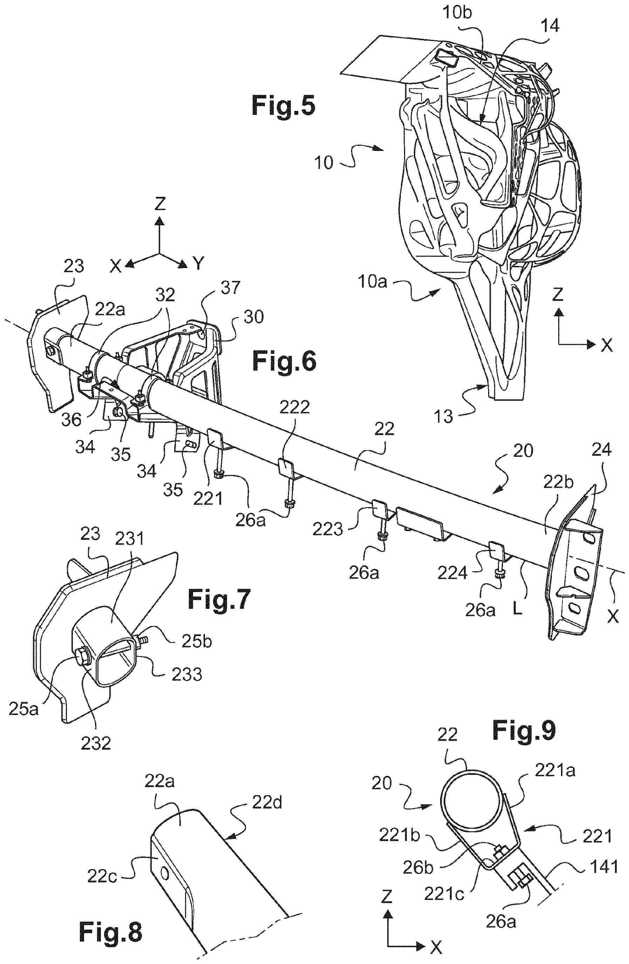

Selon l'invention, la structure lacunaire 10 définit :
- un premier passage interne 14 (voir figures 1 et 5) traversant entièrement l'élément structurel 10 et s'étendant transversalement lorsque l'élément structurel 10 est dans la position d'installation,
- un deuxième passage interne 16 reliant le premier passage 14 à une face 11b de l'élément structurel 10 dirigée vers l'arrière du véhicule lorsque l'élément structurel 10 est dans la position d'installation.

Le deuxième passage 16 est ici relié au premier passage 14 à proximité d'une extrémité 15a du premier passage 14. La position du deuxième passage 16 correspond à la position du conducteur dans le véhicule. Ce deuxième passage 16 est ici sensiblement perpendiculaire au premier passage 14.

Le premier passage 14 comporte en outre au moins deux éléments de fixation destinés à la fixation d'une traverse 20. Dans l'exemple, quatre éléments de fixation 141, 142, 143, 144 sont prévus. L'invention n'est cependant pas limitée par le nombre d'éléments de fixation. Seuls deux ou trois éléments de fixation pourraient être prévus, ou encore un nombre de fixations supérieur à 4.

Dans l'exemple, les quatre éléments de fixation 141, 142, 143, 144 sont disposés entre le deuxième passage 16 et l'autre extrémité 15b du premier passage (voir fig.1). Tel que représenté sur la figure 9, ils se présentent par exemple sous la forme d'une patte en L traversée par une vis 26a venant en prise avec un élément de fixation 221 de la traverse 20 et un écrou 26b. D'autres types d'éléments de fixation pourraient cependant être prévus, par exemple des colliers 32 similaires à ceux utilisés pour fixer la traverse 20 au support de fixation 30 de colonne de direction.

Le premier passage 14 est en outre conformé pour recevoir la traverse 20, laquelle est cintrée de rayon de courbure constant, tel que décrit plus en détail en référence aux figures 6 à 9.

Le deuxième passage 16 comporte au moins un élément de fixation destiné à fixer un support de fixation 30 d'une colonne de direction. Dans l'exemple, deux éléments de fixation 161 et 162 sont prévus de part et d'autre du deuxième passage 16. Il s'agit ici de 2 surfaces planes en vis-à-vis, situées de chaque côté du deuxième passage 16 suivant la direction transversale Y, percées chacune d'un orifice pour le passage d'une vis, d'un rivet ou autre. Là encore, le nombre d'éléments de fixation, ou leur forme, n'est pas limité.

Dans l'exemple représenté, l'élément structurel 10 comporte une ossature interne 10a de structure lacunaire réalisée d'un seul tenant avec une peau externe 10b délimitant en partie un volume de l'élément structurel 10.

Dans cet exemple, la peau externe 10b correspond sensiblement à la face de l'élément structurel 10 visible de l'intérieur de l'habitacle lorsqu'il est monté à l'intérieur du véhicule. Elle présente ainsi une face supérieure 11a, située sous le pare-brise, et une face frontale 11b, située face au conducteur et au passager avant, dirigée vers l'arrière du véhicule (voir figure 2). On notera que le deuxième passage 16 débouche sur la face frontale 11b.

Dans l'exemple, la peau externe 10b présente elle-même une structure lacunaire. Ainsi, elle présente une surface externe 11 comportant des zones lacunaires et pleines, ressemblant ainsi à un tissus ou réseau à mailles larges. On notera en outre que l'ossature interne 10a comporte des vaisseaux 12 dans l'ensemble plus épais que ceux constituant la peau externe 10b.

Une telle peau externe 10b ajourée pourra éventuellement être recouverte d'une surface technique continue (pleine), non représentée, tels que par exemple un textile ou autre.

En variante, cette peau externe 10b pourrait présenter une surface externe pleine ou encore une surface présentant une ou plusieurs zones lacunaires et pleines (non représenté).

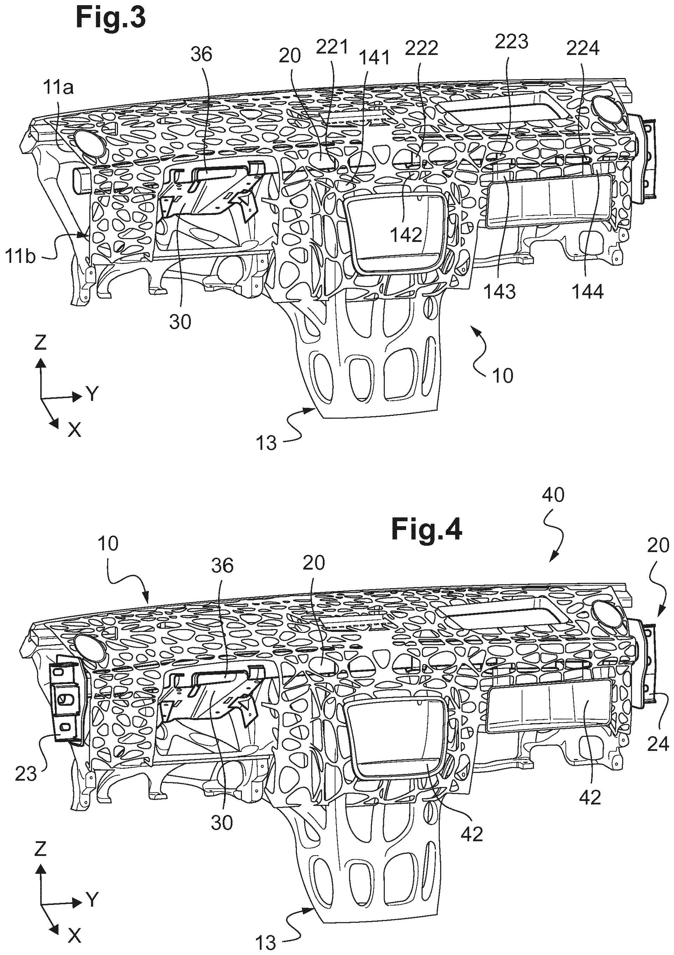

La figure 4 représente une planche de bord 40 comportant notamment l'élément structurel 10, la traverse 20 et le support de fixation 30 de colonne de direction.

La traverse 20 est décrite en référence aux figures 6 à 9. Elle comprend un tube cintré 22 de rayon de courbure constant, de préférence réalisé d'une pièce. Ce tube 22 est de préférence creux, ce qui permet un gain de matière, réalisé avantageusement en un matériau résistant, tel qu'un métal, par exemple de l'acier. Dans l'exemple, il présente une section constante circulaire sur sensiblement toute sa longueur, à savoir, sur toute sa longueur à l'exception de ses extrémités 22a et 22b. Par exemple, lorsque l'acier est utilisé, le tube peut présenter une épaisseur de 1,5mm et un diamètre de 50mm.

Le rayon de cintrage pourra être choisi de manière à rapprocher au maximum la traverse 20 de la position finale du volant, la traverse étant montée dans l'élément structurel 10 dans un plan sensiblement horizontal, sa concavité dirigée vers l'avant du véhicule. A titre d'exemple, un rayon de cintrage de l'ordre de 2500mm peut être utilisé.

Selon les modes de réalisation, le tube 22 peut en outre comporter au moins deux éléments de fixation pour sa fixation à l'élément structurel 10. Ici, quatre éléments de fixation 221, 222, 223, 224 sont prévus. Ils s'étendent de préférence le long d'une même ligne longitudinale L à la surface du tube, parallèlement à un axe central X du tube 22, ceci pour faciliter l'introduction de la traverse 20 à l'intérieur du premier passage 14.

Dans le mode de réalisation représenté, les quatre éléments de fixation sont identiques. Ils se présentent sous la forme de pattes en forme de U tel que représenté figure 9. Sur cette figure, l'élément de fixation 221 comprend deux ailes 221a et 221b reliées par un fond 221c et dont les bords libres sont solidarisés au tube 22, par exemple par soudage. Le tube 22 ferme ainsi la concavité de l'élément de fixation 221. Le fond 221c peut être fixé à l'élément de fixation 141 de l'élément structurel 10 au moyen d'un ensemble vis écrou 26a, 26b, la vis 26a traversant le fond et l'élément de fixation 141, tel que représenté. L'écrou 26b peut notamment être fixé au fond 221c, à l'intérieur de la concavité, pour faciliter la fixation de la vis.

Dans l'exemple représenté, le tube 22 est équipé d'un flasque 23, 24 à chacune de ses extrémités 22a, 22b. Ces flasques 23, 24 sont destinés à la fixation de la traverse 20 à la caisse du véhicule. En général, une traverse est fixée aux pieds avant de la caisse d'un véhicule.

Dans l'exemple représenté, l'un des flasques 23 est assemblé au tube 22 par un manchon 231 s'emboitant sur l'extrémité 22a du tube. Ce manchon 231 est pourvu de deux méplats 232 et 233 parallèles qui coopèrent respectivement avec des méplats correspondants 22c et 22d de l'extrémité 22a. Le tube ne peut ainsi pas pivoter à l'intérieur du manchon, et le flasque 23 est positionné correctement par rapport au tube. Le flasque 23 est fixé au tube 22 par un ensemble vis-écrou 25a, 25b traversant des orifices correspondants du manchon 231 et de l'extrémité 22a. Afin de faciliter le montage, l'écrou 25b peut être soudé sur le manchon 231, tel que représenté. L'autre flasque 24 est fixé de manière définitive au tube 22, ici par soudage. Il pourrait néanmoins être solidarisé au tube 22 également par un manchon.

La structure du flasque 23 permet sa fixation au tube après l'introduction du tube 22 à l'intérieur de l'élément structurel. A noter que le flasque pourrait être fixé de manière définitive au tube 22 après introduction de celui-ci dans l'élément structurel, par exemple par soudage ou autre.

En variante, le manchon 231 pourrait s'emboîter à l'intérieur du tube 22. D'autres fixations pourraient également être envisagées.

La planche de bord 40 comprend enfin un support de fixation 30 de colonne de direction, destiné à supporter le volant.

Ce support de fixation 30 comprend au moins un élément de fixation 32 à la traverse 20. Dans l'exemple, deux éléments de fixation 32 sont prévus, tel que visible plus précisément sur la figure 6. Ces éléments de fixation 32 sont ici des colliers venant enserrer le tube 22 de la traverse 20 sur toute sa périphérie.

Le support de fixation 30 comprend en outre deux éléments 34 de fixation à l'élément structurel 10. Ces éléments de fixation se présentent ici sous la forme de pattes en L appliquées contre les surfaces planes 161, 162 de l'élément structurel 10 pour y être fixées au moyen de vis 35 (fig. 6). A noter qu'un seul point de fixation pourrait éventuellement être envisagé en fonction de la forme de l'élément structurel.

Dans l'exemple, le support de fixation 30 est fixé sous le premier passage 14 de manière à être fixé à la traverse 20 au niveau d'une face inférieure de celle-ci. Le support de fixation 30 peut alors comporter une partie de réception 36 de la traverse pouvant supporter celle-ci mais aussi la guider lors de son introduction dans le premier passage 14.

A l'arrière du support de fixation 30, une fixation 37 au moins est présente afin de fixer ce dernier sur la face arrière de la structure 10 et sur la face intérieure du tablier avant du véhicule (non représenté). Cette fixation est par exemple réalisée au moyen d'un système vis-écrou traversant un orifice du support de fixation 30.

L'ensemble est ainsi fixé sur la caisse suivant quatre zones de fixations liées aux flasques 23 et 24, à l'arrière du support de fixation 30, par des fixations 37, et au bas de la structure.

Le mode de montage complet est semblable dans le principe à celui d'une planche de bord de l'état de l'art.

Le montage de la planche de bord 40 est maintenant décrit en référence aux figures 1 à 4.

Le support de fixation 30 de colonne de direction est tout d'abord assemblé à l'élément structurel lacunaire 10 à l'intérieur du deuxième passage 16. À cet effet, les pattes 34 sont mises en appui contre les surfaces 161, 162 de l'élément structurel 10 puis fixées au moyen de vis 35. Le support de fixation 30 est alors positionné tel que représenté figure 2, sous le premier passage 14.

La traverse 20 est ensuite introduite à l'intérieur du premier passage 14 par l'extrémité 15b de celui-ci. À cet effet, le flasque 23 n'est pas encore fixé à l'extrémité 22a du tube 22 qui est introduite en premier à l'intérieur de l'élément structurel 10. Les éléments de fixation 221-224 de la traverse étant fixés à la traverse de manière à être disposés entre le deuxième passage et l'extrémité 15b de l'élément structurel, ils ne gênent pas le passage de la traverse au niveau du support de fixation 30 de la colonne de direction. La traverse est introduite par coulissement jusqu'à une position dans laquelle les éléments de fixation 221-224 de la traverse 20 sont en contact avec les éléments de fixation correspondants 141-144 de l'élément structurel. En outre, une partie du tube 22 repose sur la partie de réception 36 du support de fixation 30 de colonne de direction (figure 3). Tel qu'on peut le voir sur la figure 5, le premier passage 14 présente des dimensions internes plus grandes que la section de la traverse. On pourrait toutefois envisager de réaliser un premier passage 14 de dimensions réduites, qui définisse un logement pour la traverse : la traverse coulisserait alors à l'intérieur du logement en contact contre des parois du logement.

La traverse 20 est ensuite fixée au support de fixation 30 de colonne de direction au moyen des éléments de fixation 32, et fixée à l'élément structurel 10 au moyen des éléments de fixation 221-224.

Le flasque 23 peut ensuite être monté à l'extrémité 22a de la traverse 20, soit de manière définitive, par exemple par soudage, soit de manière amovible, par exemple au moyen de l'ensemble vis écrou 25a, 25b (figure 4).

Une partie basse 13 de la structure 10 (fig.1) est fixée sur la partie inférieure de la caisse appelée plancher central (non représenté). Cette liaison avec le plancher est composée d'une fixation ou de plusieurs fixations de type vis-écrou.

Le procédé de montage de la planche de bord selon l'invention est ainsi simple et rapide du fait du nombre de pièces réduits. Il est notamment possible de réaliser un élément structurel pesant environ 13 kg contre plus de 23 kg pour un corps de planche de bord classique formé de plusieurs pièces assemblées.

En outre, la forme et l'agencement de l'élément structurel est peu contrainte par les fixations, le nombre d'éléments fixés étant réduit.

Conformément à l'invention, l'impression en 3D intègre d'autres fonctions au corps de planche de bord, à savoir des boîtiers 42 pour bac de rangement, des logements pour air-bag, et des conduits aérauliques.

Dans le mode de réalisation décrit et illustré aux figures 6 à 9, le premier passage 14 est conformé pour recevoir une traverse 20 cintrée présentant un rayon de courbure constant. Sans sortir du cadre de l'invention, dans un autre mode de réalisation non illustré de l'invention, le premier passage peut être sensiblement rectiligne et conformé pour recevoir une traverse sensiblement droite. Dans encore un autre mode de réalisation non illustré de l'invention, le premier passage peut être conformé pour recevoir une traverse cintrée présentant un rayon de courbure non constant.

## Revendications

1. Elément structurel (10) formant un corps de planche de bord de véhicule automobile destiné à être installé dans une position d'installation transversale à l'intérieur d'un habitacle de véhicule, présentant une structure lacunaire d'un seul tenant, qui définit
- un premier passage interne (14) traversant entièrement l'élément structurel et s'étendant transversalement lorsque l'élément structurel est dans la position d'installation, le premier passage (14) étant conformé pour recevoir une traverse (20), notamment cintrée de rayon de courbure constant et comportant au moins deux éléments de fixation (141-144) destinés à être fixés à la traverse,
- un deuxième passage interne (16) reliant le premier passage (14) à une face (11b) de l'élément structurel dirigée vers l'arrière du véhicule lorsque l'élément structurel est dans la position d'installation, le deuxième passage (16) comportant au moins un élément de fixation (161, 162) destiné à fixer un support de fixation (30) de colonne de direction,
**caractérisé en ce que** la structure lacunaire d'un seul tenant est sous la forme d'un réseau de matière formant des mailles et des noeuds, issue d'une impression en trois dimensions, intégrant au corps de planche de bord des boîtiers (42) pour bac de rangement, des logements pour air-bag, et des conduits aérauliques

2. Elément structurel (10) selon la revendication 1, **caractérisé en ce que** le deuxième passage (16) est relié au premier passage (14) à proximité d'une extrémité (15a) du premier passage et **en ce que** les éléments de fixation (141-144) du premier passage (14) sont situés entre le deuxième passage (16) et l'autre extrémité (15b) du premier passage.

3. Elément structurel (10) selon la revendication 1 ou 2, **caractérisé en ce qu'**il comporte une ossature interne (10a) de structure lacunaire d'un seul tenant avec une peau externe (10b) délimitant au moins en partie un volume de l'élément structurel, ladite peau externe (10b) présentant une surface externe (11) choisie parmi une surface lacunaire, une surface pleine, une surface présentant une ou plusieurs zones lacunaires et pleines.

4. Elément structurel (10) selon l'une quelconque des revendications 1 à 3, **caractérisé en ce qu'**il est en un matériau polymère choisi parmi l'acrylonitrile-butadiène-styrène, le polypropylène, l'acide polylactique.

5. Planche de bord (40) de véhicule automobile destinée à être montée à l'intérieur d'un véhicule suivant une direction transversale de celui-ci, **caractérisée en ce qu'**elle comprend :
- un élément structurel (10) selon l'une quelconque des revendications 1 à 4,
- une traverse (20) de planche de bord, notamment en métal, apte à être insérée à l'intérieur de l'élément structurel (10), la traverse (20) comprenant un tube cintré (22) de rayon de courbure constant, équipé d'un flasque (23, 24) à chacune de ses extrémités, au moins l'un des flasques (23) étant assemblé au tube de manière amovible,
- un support de fixation (30) de colonne de direction comportant au moins un élément de fixation (32) à la traverse (20),
le support de fixation (30) de colonne de direction étant fixé à l'élément structurel (10) à l'intérieur du deuxième passage (16), la traverse (20) étant fixée à l'élément structurel (10) à l'intérieur du premier passage (14) et étant fixée au support de fixation (30) de colonne de direction.

6. Planche de bord (40) selon la revendication 5, **caractérisée en ce que** les éléments de fixation (221-224) s'étendent le long d'une même ligne longitudinale (L) à la surface du tube (22), parallèlement à un axe central (X) du tube.

7. Véhicule automobile comprenant une caisse structurelle, une planche de bord (40) selon la revendication 6, **caractérisée en ce que** la planche de bord (40) est fixée à la caisse via au moins quatre zones de fixation localisées :
- sur chacun des deux flasques (23, 24) d'extrémité de la traverse (20),
- à l'arrière du support de fixation de colonne (30),
- dans une zone basse de l'élément structurel (10).

## Patentansprüche

1. Strukturelement (10), das einen Kraftfahrzeugarmaturenbrettkörper bildet, der dazu bestimmt ist, in einer Querinstallationsposition im Inneren einer Fahrgastzelle installiert zu werden, wobei das Strukturelement eine einstückige Lückenstruktur aufweist, die Folgendes definiert:
- einen ersten inneren Durchgang (14), der das Strukturelement gänzlich durchquert und sich quer erstreckt, wenn das Strukturelement in der Installationsposition ist, wobei der erste Durchgang (14) dazu ausgebildet ist, einen Querträger (20) aufzunehmen, der insbesondere mit einem konstanten Biegeradius gebogen ist und mindestens zwei Fixierungselemente (141 - 144) aufweist, die dazu bestimmt sind, an dem Querträger befestigt zu werden,
- eine zweiten inneren Durchgang (16), der den ersten Durchgang (14) mit einer Fläche (11b) des Strukturelements verbindet, die zur Rückseite des Fahrzeugs hin gerichtet ist, wenn das Strukturelement in der Installationsposition ist, wobei der zweite Durchgang (16) mindestens ein Fixierungselement (161, 162) aufweist, das zur Befestigung einer Lenksäulenbefestigungsstütze (30) bestimmt ist,
**dadurch gekennzeichnet, dass** die einstückige Lückenstruktur in der Form eines Materialnetzes vorliegt, das Maschen und Knoten bildet und mittels 3D-Druckens hergestellt ist und Aufnahmen (42) für Lagerbehältnisse, Airbag-Aufnahmen und lufttechnische Kanäle in den Armturenbrettkörper integriert.

2. Strukturelement (10) nach Anspruch 1, **dadurch gekennzeichnet, dass** der zweite Durchgang (16) in der Nähe eines Endes (15a) des ersten Durchgangs mit dem ersten Durchgang verbunden ist und dass die Fixierungselemente (141 - 144) des ersten Durchgangs (14) zwischen dem zweiten Durchgang (16) und dem anderen Ende (15b) des ersten Durchgangs angeordnet sind.

3. Strukturelement (10) nach Anspruch 1 oder 2, **dadurch gekennzeichnet, dass** es ein inneres Lückenstrukturgerippe (10a) aufweist, das mit einer Außenhaut (10b) einstückig ist, die ein Volumen des Strukturelements mindestens teilweise begrenzt, wobei die Außenhaut (10b) eine Außenfläche (11) aufweist, die unter einer Lückenfläche, einer massiven Fläche und einer Fläche, die einen oder mehrere Lücken- und Massivbereiche aufweist, ausgewählt ist.

4. Strukturelement (10) nach einem der Ansprüche 1 bis 3, **dadurch gekennzeichnet, dass** es aus einem Polymermaterial besteht, das unter Acrylnitril-Butadien-Styrol, Polypropylen und Polylactid ausgewählt ist.

5. Kraftfahrzeugarmaturenbrett (40), das dazu bestimmt ist, im Inneren eines Fahrzeugs in einer quer zu diesem verlaufenden Richtung montiert zu werden, **dadurch gekennzeichnet, dass** es Folgendes umfasst:
- ein Strukturelement (10) nach einem der Ansprüche 1 bis 4,
- einen Armaturenbrettquerträger (20), insbesondere aus Metall, der in das Innere des Strukturelements (10) eingeführt werden kann, wobei der Querträger (20) ein mit einem konstanten Biegeradius gebogenes Rohr (22) umfasst, das an jedem seiner Enden mit einem Flansch (23, 24) versehen ist, wobei mindestens einer der Flansche (23) entfernbar an dem Rohr montiert ist,
- eine Lenksäulenbefestigungsstütze (30), die mindestens ein Element (32) zur Befestigung an dem Querträger aufweist, wobei die Lenksäulenbefestigungsstütze (30) an dem Strukturelement (10) im Inneren des zweiten Durchgangs (16) befestigt ist, wobei der Querträger (20) an dem Strukturelement (10) im Inneren des ersten Durchgangs (14) befestigt ist und an der Lenksäulenbefestigungsstütze (30) befestigt ist.

6. Armaturenbrett (40) nach Anspruch 5, **dadurch gekennzeichnet, dass** sich die Fixierungselemente (221 - 224) entlang einer selben Längslinie (L) an der Oberfläche des Rohrs (33), parallel zu einer mittleren Achse (X) des Rohrs.

7. Kraftfahrzeug, umfassend einen Wagenkasten, ein Armaturenbrett (40) nach Anspruch 6, **dadurch gekennzeichnet, dass** das Armaturenbrett (40) über mindestens vier Befestigungsbereiche an dem Wagenkasten befestigt ist, die sich:
- an jedem der beiden Endflansche (23, 24) des Querträgers (20),
- an der Rückseite der Säulenbefestigungsstütze (30),
- in einem unteren Bereich des Strukturelements (10) befinden.

## Claims

1. Structural element (10) forming a motor vehicle dashboard body that is intended to be installed in a transverse installation position inside a vehicle passenger compartment, having a one-piece openwork structure, which structure defines:
- a first internal passage (14) that passes all the way through the structural element and extends transversely when the structural element is in the installation position, the first passage (14) being shaped so as to receive a crossmember (20) that is in particular bent with a constant radius of curvature and having at least two fastening elements (141-144) that are intended to be fastened to the crossmember,
- a second internal passage (16) that connects the first passage (14) to a face (11b) of the structural element that is directed towards the rear of the vehicle when the structural element is in the installation position, the second passage (16) having at least one fastening element (161, 162) that is intended to fasten a steering column fastening support (30),
**characterized in that** the one-piece openwork structure is in the form of a network of material forming meshes and nodes, produced by three-dimensional printing, incorporating into the dashboard body enclosures (42) for storage boxes, airbag housings, and aeraulic ducts.

2. Structural element (10) according to Claim 1, **characterized in that** the second passage (16) is connected to the first passage (14) in the vicinity of one end (15a) of the first passage, and **in that** the fastening elements (141-144) of the first passage (14) are situated between the second passage (16) and the other end (15b) of the first passage.

3. Structural element (10) according to Claim 1 or 2, **characterized in that** it has an internal framework (10a) with an openwork structure that is in one piece with an external skin (10b) at least partially delimiting a volume of the structural element, said external skin (10b) having an external surface (11) chosen from an openwork surface, a solid surface and a surface that has one or more openwork and solid regions.

4. Structural element (10) according to any one of Claims 1 to 3, **characterized in that** it is made of a polymer material chosen from acrylonitrile butadiene styrene, polypropylene and polylactic acid.

5. Motor vehicle dashboard (40) intended to be mounted inside a vehicle in a transverse direction thereof, **characterized in that** it comprises:
- a structural element (10) according to any one of Claims 1 to 4,
- a dashboard crossmember (20), in particular made of metal, that is able to be inserted into the structural element (10), the crossmember (20) comprising a bent tube (22) with a constant radius of curvature, which is equipped with a flange (23, 24) at each of its ends, at least one of the flanges (23) being joined to the tube in a removable manner,
- a steering column fastening support (30) having at least one element (32) for fastening to the crossmember (20),
the steering column fastening support (30) being fastened to the structural element (10) inside the second passage (16), and the crossmember (20) being fastened to the structural element (10) inside the first passage (14) and being fastened to the steering column fastening support (30).

6. Dashboard (40) according to Claim 5, **characterized in that** the fastening elements (221-224) extend along a single longitudinal line (L) at the surface of the tube (22), parallel to a central axis (X) of the tube.

7. Motor vehicle comprising a structural bodyshell and a dashboard (40) according to Claim 6, **characterized in that** the dashboard (40) is fastened to the bodyshell via at least four fastening regions that are located:
- on each of the two end flanges (23, 24) of the crossmember (20),
- at the rear of the column fastening support (30),
- in a bottom region of the structural element (10).
